# EUROPEAN PATENT APPLICATION

(11) **EP 3 273 722 A1**
(43) Date of publication of application: **24.01.2018**
(21) Application number: 17180203.6
(22) Date of filing: 07.07.2017
(51) Int. Cl.: H04W 40/00

(54) **SYSTEM AND METHOD FOR TIME-DIVISION TRANSMISSION**

(30) Priority: 18.07.2016 IT 201600074712
(71) Applicant: C.T. Elettronica S.r.l., 50021 Barberino Val d'Elsa (FI) (IT)
(72) Inventor: CIULLI, Giuseppe, 50050 MONTAIONE (FI) (IT)
(74) Representative: Firmati, Leonardo

(57) **Abstract**

Described is a radio communication system comprising at least one control station (110), comprising at least one antenna, a radio frequency transceiver stage electrically connected to the antenna and a data processing unit configured for causing, through the radio frequency transceiver stage, the transmission of at least one radio signal towards at least one secondary unit or node. The system comprises a plurality of network nodes (120a-120g), each comprising at least one antenna and a relative radio frequency transceiver stage electrically connected to the antenna. A uniquely associated node address is assigned at each node (120a-120g). A first node (120) comprises a radio repeater configuration in which it re-transmits a radio signal received towards every other further node within the range of the radio signal and means for comparing the node addresses comparing the relative address of the node with a node address contained in the radio signal received. This invention also relates to the associated method.

## Description

This invention relates to the field of the radio transmission systems.

More in detail, this invention relates to a multi-node radio transmission system.

This invention also relates to a method for radio transmission of data on a multi-node structure.

There are currently various types of radio systems which are able to offer data transmission for signalling purposes.

With reference in particular to the sector of road safety, the technologies currently in use cover a fundamental role for reducing to a minimum the risk of accidents in any environmental condition, road surface condition or in the presence of events such as fires, heavy traffic or obstacles in the carriageway.

LED signalling devices are not currently available on the market for communicating information to the driver, lighting systems to guarantee the best perception of the obstacles in any condition and various types of sensors.

The known systems are managed by a control unit located in the territory and by centralised monitoring systems, which are, on the other hand, positioned in strategic areas.

The interconnection of these devices is currently performed, for example, by means of the following types of transmission channels:
- copper Ethernet
- optical fibre Ethernet
- RS485 bus
- power line carrier
- Wireless LAN 802.11
- Point-point radio

When identifying the optimum transmission channel, consideration is given to aspects such as the material possibility of forming the system (passage of wiring, installation of antennas, conflicts with existing systems, current regulations), type of devices to be controlled (available interfaces, passband requested, required protocols and safety) considering also the cost of the system.

With specific reference to road safety, amongst the issues which can still be perfected in road safety systems, precisely the interconnection technology adopts an important role. The possibilities previously mentioned all have merits and defects, and in some situations they force the designer to make compromises which are not always negligible.

More in detail, with the exception of all those broad band devices (video cameras, mobile phones, etc.) where the choice of the communication channel is practically mandatory, there are a series of apparatuses with very narrow band widths, where the choice of the interconnection technology could affect greatly the price or not be completely suitable.

Starting from the most widespread transmission technology, we firstly find all the dedicated cable technologies (copper Ethernet, optical fibre Ethernet, RS485 bus); disadvantageously, the dedicated cable technologies require the installation of cables, as well as the installation of specific apparatuses. In the case of expansion or modernisation of existing systems, the possibility of adding new cables is not guaranteed and in any case the costs are high.

Less widespread than the dedicated cable technologies, there are the power line carrier systems: in these systems the data signal is transmitted through the power supply cables traditionally present in each home.

However, the power line carrier systems also have several drawbacks: above all, they have a very limited range, suffer from disturbances induced on the electricity network and in turn require costly filter systems designed each time on each system. The high probability of transmission error, together with the reduced bandwidth allowed by this technology, and the time taken to transfer a signal, are often are not compatible with the performance required.

There is, therefore, the transmission of data by Wireless LAN. Even if it is a very wide band system, it has drawbacks which are not negligible in highway applications and more generally speaking in the applications of signalling over large areas. The propagation features of the frequencies used in Wi-Fi considerably reduce the capacity to avoid obstacles, and as a result of this the maximum distance which can be reached is influenced by the surrounding environment and, given the cost of the device, increasing the range with more efficient antennas or repeaters might not be acceptable, especially if compared with the type of device which, as we have said, does not have specific requirements in terms of band width.

Lastly, there are the point-point radio systems: these are used to cover long distances without installing cables and are, in reality, cumbersome and extremely expensive apparatuses.

Given the high directivity of the antennas, towers are often required to create an optical line between the transceivers. They are almost never used for the control of a single device; much more often these systems are used to connect two different sub-networks.

A system is known for the transmission of radio signals which is able to overcome at least partly to the problems present according to the prior art; this system for transmitting radio signals is composed of a plurality of nodes. Each node is equipped with: an antenna, a radio frequency transceiver stage and a data processing unit configured for transmitting radio signals. The nodes are positioned in a linear mesh of radio transceivers where a unique address is assigned at each node. This transmission system is such that the signal, after having been generated, is propagated using the intermediate nodes between the station of origin of the signal and the station for receiving the signal as repeaters. Operationally, the station of origin of the signal attaches to the signal also the information relating to the destination address of the signal and that of the node which must perform a repeater function. All the nodes located inside the radius of transmission of the main unit will receive the signal, but only that indicated inside the signal as repeater will propagate it indicating, if the destination station is still outside the range of transmission of this first repeater, the address of the subsequent node which must perform the function of repeater. This solution has, however, drawbacks: if the network is composed of a very high number of nodes, for example more than 20, or the network is installed in zones where there is a high component of electromagnetic noise, it becomes difficult to assess the possible incidence of errors. In the event of a transmission error, or of a fault of one of the nodes, it may be necessary to repeat the signal, making it impossible to evaluate in advance when the radio transmission channel will be free. Consequently, there may be overlapping in the transmission of a signal. This problem causes delays and sometimes even errors in the network which can accumulate until the collapse of the network.

The aim of this invention is therefore to provide a system, and a method associated with it, for multi-mode radio transmission which overcomes the above-mentioned drawbacks of the prior art and in particular which is able to guarantee the correct signal transmission regardless of any transmission errors or faults of one or more nodes of the network. A further aim of this invention is to allow transmission even over long distances in a manner which can be configured in a modular fashion in such a way that the system can expand without large investments on the portions already installed.

The technical purpose indicated and the aims specified are substantially achieved by a system and by a method for multi-node time-division radio transmission comprising the technical features described in one or more of the appended claims. The dependent claims correspond to possible different embodiment of the invention.

More specifically, in accordance with a first aspect, this invention relates to a time-division system for transmission of a radio signal in a radio communication network. The radio communication network comprises a plurality of network nodes, wherein each network node is assigned with a respective unique identifier and a respective time slot. The system comprises a first network node configured for transmitting, in a first time slot towards a first area surrounding the first network node, a signal comprising an identifier of a destination node.

The system also comprises a second network node, belonging to the first surrounding area. The second network node is configured to receive the signal and check whether the relative identifier is equal to the identifier of the destination node. The second network node is also configured for re-transmitting in a second time slot towards a second area surrounding the second network node, the signal comprising the identifier of the destination node, in the case of a negative check.

In accordance with a second aspect, this invention relates to a method for time-division transmission of a radio signal in a radio communication network.

This method comprises transmitting in the first time slot from the first network node towards the first area surrounding the first network node the signal comprising the identifier of the destination node. Preferably, all the network nodes situated in the first surrounding area receive the signal and in the event that the instruction must be performed by them, even if they are not the recipients, it is actuated, if necessary, also outside the strictly relative time slot. Moreover, in the second time slot, the second network node checks whether the relative identifier is equal to the identifier of the destination node and, if the check is negative, re-transmits the signal comprising the identifier of the destination node towards the second area surrounding the second network node.

In one or more of the aspects indicated, this invention may comprise one or more of the following features.

Preferably, there is a third network node, belonging to the second area surrounding the second network node. The third network node is configured to receive the signal and check whether the relative identifier is equal to the identifier of the destination node. If the check is negative, the third network node is configured for re-transmitting in a third time slot towards a third area surrounding the third network node, the signal comprising the identifier of the destination node.

Preferably, a control station is configured to originate the signal comprising an identifier of a destination node and transmit it in an area surrounding the control station comprising at least the first network node.

Preferably, the first network node is assigned with the first time slot immediately following the transmission of the signal by the control station.

Preferably, all the network nodes of the second surrounding area receive the signal, and they actuate it if necessary, and the third network node checks whether, in the third time slot, the relative identifier is equal to the identifier of the destination node. If the check is negative, the third network node re-transmits in the third time slot the signal comprising the identifier of the destination node towards a third area surrounding the third network node.

Preferably, the above-mentioned actions are repeated for further network nodes, until the check is positive.

Preferably, control station comprises at least one antenna, a radio frequency transceiver stage electrically connected to the antenna and a data processing unit configured for causing, through the radio frequency transceiver stage, the transmission of at least one radio signal towards at least one network node.

Preferably, network nodes comprise at least one antenna and a relative radio frequency transceiver stage electrically connected to the antenna.

Advantageously, the network nodes and, if necessary, the control station form a linear mesh type radio communication network.

Preferably, the method comprises the predetermined assignment of a time slot to each network node, inside of which the node must perform all the relative operations; advantageously, the node cannot transmit outside the relative slot time.

Advantageously, if during a time slot the address of the destination node is equal to or less than that of the node to which the time slot belongs then the node in question will not re-transmit the signal.

Further features and advantages of the invention are more apparent in the detailed description below, with reference to a preferred, non-limiting, embodiment of a method for transmitting a radio signal.

The description is set out below with reference to the accompanying drawings which are provided solely for purposes of illustration without restricting the scope of the invention and in which:
- Figures 1 to 4 illustrate a block diagram of a sequence of condition of use of a radio transmission system;
- Figure 1 a shows a block diagram of a possible first condition of use of the radio transmission system of Figure 1 to 4;
- Figures 5 to 8 show a block diagram of a sequence of condition of use of the radio transmission system of Figure 1 to 4 in a fault situation of one of the nodes.

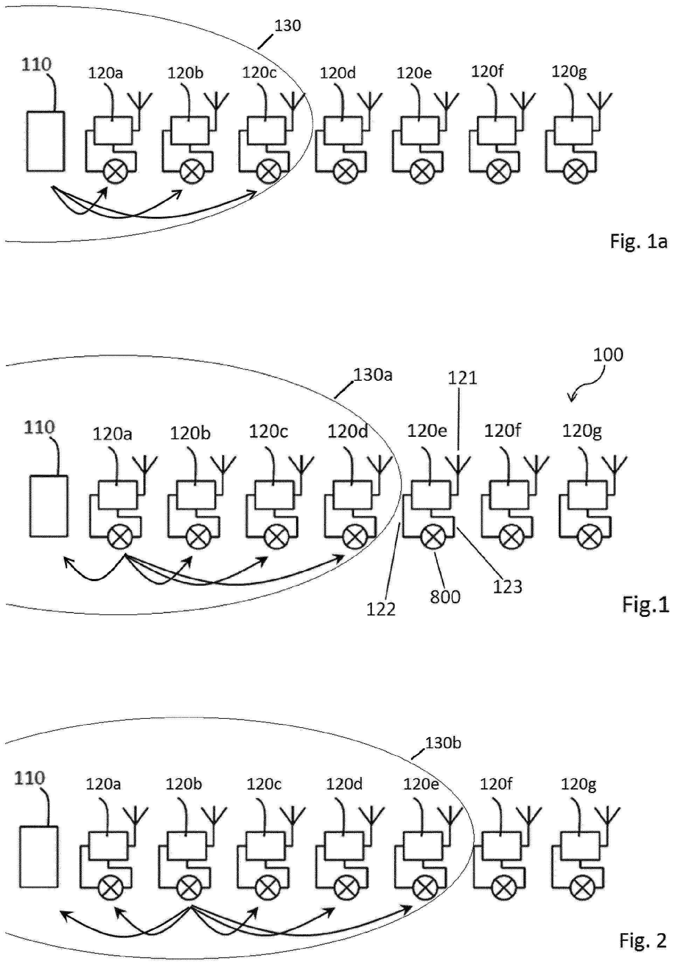

As illustrated in Figure 1, the numeral 100 denotes in its entirety a time-division system for transmission of a radio signal in a radio communication network comprising a plurality of network nodes.

More specifically, the transmission system according to this invention is configured to operate in outdoor environments, especially over long distances such as, for example, motorway sections.

The system 100 is designed in order to be able to transmit signalling data between several nodes positioned remotely relative to each other.

The signalling data may be, for example but without limiting the invention, road type signalling data, and therefore concern traffic speed measurements, detecting the presence of persons in a carriageway, infringements or other situations typical of a highway environment.

In accordance with a possible embodiment, for example illustrated in Figure 1a, the system 100 comprises a control station 110 and a plurality of network nodes 120a-120h interconnected by means of a radio transmission channel.

In detail, the system 100 for data transmission preferably uses a numerical modulation in the 433 MHz or 868 MHz frequency band; the choice of these frequency bands should not be viewed as limiting the invention, but it is nevertheless preferable to use transmissions below GHz, in order to reduce the phenomena of reducing the transmission quality due to scattering; moreover, it is preferable to use frequency bands for which it not necessary to apply for a ministerial licence for using specifically assigned frequencies.

The control station 110 may be conceived as described in patent application FI2014A000215 in the name of the same Applicant and which is incorporated herein by reference as regards the structure of the control station.

More in detail, in the system 100 used as the radio transmission system for use in this invention, there may be up to 10 control stations, each of which identifies a network address which may therefore range from 0 to 9; the system 100 according to this invention may also comprise up to 65524 nodes, each of which has an address with a unique number of, therefore, between 10 and 65523, a number representing the node address and it is consequently attributed in increasing order to the nodes as a function of their location inside the linear mesh network.

The system 100 is configured as a linear type mesh network, wherein each node may act both as signal repeater and as a final unit being positioned along the path defined by the linear type mesh network according to a unique increasing order of address.

Each network node comprises at least one RF stage which is able to operate in a repeater configuration, which supplies at least one antenna 121 configured to operate on the same frequency of emission as the control station 110, if present, or in any case in the same band.

Each node has a plurality of terminals 122, 123 of electrical connection with a user 800, which for simplicity of representation is shown in the accompanying drawings as a lamp; this specific configuration must not be construed as limiting the scope of the invention. Control and/or power supply signals may be transmitted on these terminals 122, 123 according to any of the known techniques.

As an alternative to the lamps, variable power supply modules could be connected for lamps of the conventional type, transceivers for control and/or response signals towards other types of lamps using technologies such as 1-10V, PWM or RS485.

Figures 1 to 8 illustrate a possible embodiment of the system 100 comprising a main unit 110 and a plurality of nodes 120a-120g (therefore, seven network nodes in the particular case shown in the drawings), each of which represent, by way of an example, a lamp 800 each connected to a relative node 120 by a plurality of electrical connection terminals on which may be transmitted electric control and/or power supply signals according to any of the known techniques.

Figures 1 to 8 indicate with continuous lines the signals transmitted from one node towards the other nodes present inside the area surrounding the node and which represents the range of the radio signal.

During installation, the system 100 according to this invention is set up as follows: firstly, each network node, together with its unique address, is assigned with a predetermined time slot, the duration of which is decided in such a way as to optimise the times for transmitting the signal, however, taking into consideration the node processing times, in such a way that this has sufficient time to perform all the operations that have been requested.

The time slots are assigned according to an order defined by the increasing order of the addresses of the nodes, in such a way that the succession of the time slots coincides with a sliding of the nodes from that with the numerically lowest address to that with the address numerically highest inside the network.

Figures 1 to 8 show the succession of a series of time slots.

According to one possible embodiment, shown in Figure 1, the system 100 comprises a first network node 120a configured for transmitting in a first time slot, towards a first area 130a surrounding the first network node, a signal comprising an identifier of a destination node.

Preferably, as shown in Figure 1a, the control station 110 is configured to originate the signal comprising an identifier of a destination node and transmit it in an area 130 surrounding the control station comprising at least the first network node 120a. More specifically, the first network node may be defined for assignment of the first time slot immediately following the transmission of the signal by the control station.

Figure 2 illustrates the situation in a second time slot which shows that the system 100 comprises a second network node 120b, belonging to the first area 130a, configured to receive the signal and check whether the respective identifier is equal to the identifier of the destination node. If the check is negative, the second node 120b is configured for re-transmitting, in the second time slot towards a second area 130b surrounding the second network node, the signal comprising the identifier of the destination node.

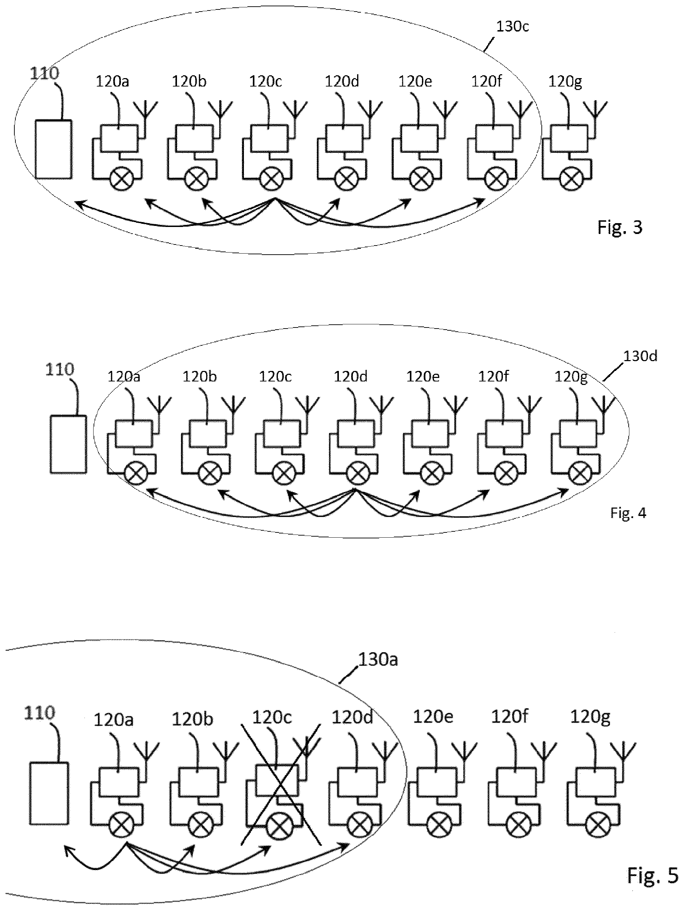

The system also comprises a third network node 120c, belonging to the second area 130b, which is active during the time slot shown in Figure 3, which corresponds to a third time slot. The third network 120c is configured to receive the signal and check whether the relative identifier is equal to the identifier of the destination node. If the check is negative, the third network node 120c is configured for re-transmitting in a third time slot towards a third area 130c surrounding the third network node, the signal comprising the identifier of the destination node.

The above-mentioned steps are repeated according to the temporal succession of the time slots.

It is assumed for this particular embodiment that the final recipient of the signal sent from the control station 110 is the seventh node 120g. As shown in Figure 4, the transmission performed by a fourth node 120d in a fourth area 130d surrounding the fourth node already obtains the desired result of the signal reaching the destination. However, also in the successive time slots, that is to say, those assigned to the fifth and sixth node, respectively 120e and 120f, there will still be the re-transmission of the signal.

In the seventh time slot, not illustrated, the seventh node 120g, the original recipient of the signal sent, will actuate the signal without re-transmitting it, after having recognised that the relative address coincides with that indicated by the signal.

Any nodes after the destination node, not illustrated, can have already received the signal from the nodes before the seventh node 120g. In this case, each successive node, within the relative time slot, checks the relative address, comparing it with that of the recipient. In this case, the outcome of the check indicates that the address transmitted together with the signal corresponds to a node which has been assigned with an address lower than its own. Consequently, the successive nodes are configured to not perform actions.

Preferably, the destination node may be configured to generate a signal confirming reception which will have as the destination address that of the node which originally generated the signal to be actuated. The transmission of this signal confirming reception is performed according to the same protocol used for the signal to be actuated: each node inside the relative time slot will take all the decisions relative to the re-transmission of the signal confirming reception but, unlike what occurs for the signal to be actuated, it will only be re-transmitted if the relative node address is greater than that of the destination node. Preferably, each node is configured to recognise whether it has already re-transmitted, within the relative previous time slot, a signal which it has received. Preferably, if the signal has already been re-transmitted, each node is configured to not perform any action. According to one possible embodiment, at the end of the time slot cycle it restarts from the first time slot assigned to the first network node 120a. Preferably, the first node 120a is configured to recognise whether it has already re-transmitted, within the relative previous time slot, a signal which it has received. Advantageously, if the signal has already been re-transmitted, the first node 120a is configured to not perform any action. Otherwise, the first node is configured to proceed as described above.

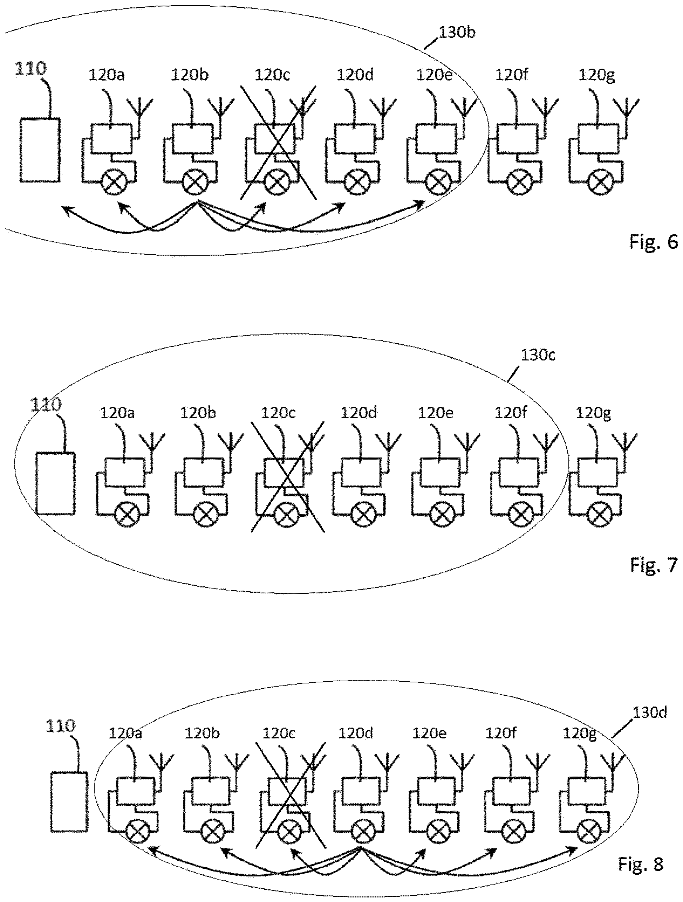

Figures 5 to 8 show how the system behaves if there is a fault in one of the nodes, in particular in the third node 120c. As in the previous example, the recipient of the signal is the seventh node 120g, therefore, as shown in Figures 5 and 6, the first and the second node, respectively 120a and 120b, transmit the signal as in the previous case. Within the third time slot, as shown in Figure 7, as the third node 120c is damaged, there will be no re-transmission of the signal. Normally, this would cause the loss of the signal, but thanks to the high redundancy permitted by this invention, it is possible to prevent this problem. In effect, as shown in Figures 5 and 6, during the first two time slots the signal is also sent to the fourth node 120d of the network which may, therefore, inside the relative time slot, shown in Figure 8, guarantee the continuation of the propagation of the signal up to the destination node 120g without it being interrupted.

It is therefore evident that this transmission method, thanks to a series of re-transmissions of the signal, which are redundant, makes it possible to eliminate the risk that, as a result of faults along the transmission line or interference due to any electromagnetic noise present in the area where the network has been installed, the signal is lost and therefore not correctly transmitted to the destination. More specifically, if there is a fault also in the fourth node 120d, the repetition of signal transmission performed by the node 120e would guarantee the delivery of the signal to the destination node 120g. Advantageously, the system according to this invention does not require special measures in the definition and design of the radio frequency stages and the relative antennas precisely because their range is limited. Consequently, the electromagnetic pollution produced by or of the nodes 120 is reduced.

Finally, it is clear that this invention may be added to or adapted in ways obvious to experts in the trade without thereby departing from the protective scope of the appended claims.

## Claims

1. A time-division transmission system (100) for outdoor environments of a radio signal in a linear mesh radio communication network comprising a plurality of network nodes (120a-120g), wherein each network node is assigned with a respective unique increasing identifier and a respective time slot, the system comprising:
- a first network node (120a) configured for transmitting, in a first time slot towards a first area (130a) surrounding the first network node (120a), a signal comprising an identifier of a destination node;
- a second network node (120b), belonging to the first area (130a), configured for:
- receiving the signal and checking whether the relative identifier is equal to the identifier of the destination node;
- if the check is negative, re-transmitting, in a second time slot towards a second area (130b) surrounding the second network node, the signal comprising the identifier of the destination node.

2. The transmission system according to claim 1, further comprising a third network node (120c), belonging to the second area (130b), configured for:
- receiving the signal and checking whether the relative identifier is equal to the identifier of the destination node;
- if the check is negative, re-transmitting, in a third time slot towards a third area (130c) surrounding the third network node (120c), the signal comprising the identifier of the destination node.

3. The transmission system according to claim 1, comprising a control station (110) configured to originate the signal comprising an identifier of a destination node and transmit it in an area (130) surrounding the control station comprising at least the first network node (120a).

4. The transmission system according to claim 3, wherein the first network node (120a) is assigned with the first time slot immediately following the transmission of the signal by the control station (110).

5. A method of time-division transmission of a radio signal in an outdoor environment of a radio signal in a radio communication network comprising a plurality of network nodes (120a-120g), wherein each network node is assigned with a respective unique increasing identifier and a respective time slot, the method comprising the steps of:
a) transmitting in a first time slot from first network node (120a) towards a first area (130a) surrounding the first network node, a signal comprising an identifier of a destination node;
b) receiving the signal at all the network nodes (120b-120d) located in the first area (130a);
c) in a second time slot, checking whether the identifier of a second network node (120b) of the first area (130a) to which is assigned the second time slot is equal the identifier of the destination node and, if the check is negative, re-transmitting in the second time slot from the second network node (120b) towards a second area (130b) surrounding the second network node the signal comprising the identifier of the destination node.

6. The transmission method according to claim 5, further comprising the steps of:
d) receiving the signal at all the network nodes (120c-120e) of the second area (130b) and checking, in a third time slot, whether the identifier of a third network node (120c) is equal the identifier of the destination node;
e) if the check is negative, re-transmitting in the third time slot from the third network node (120c) towards a third area (130c) surrounding the third network node, the signal comprising the identifier of the destination node.

7. The transmission method according to claim 6, wherein the steps d) - e) are repeated for further network nodes, until the check is positive.

8. The transmission method according to claim 7, wherein the destination node actuates the signal without re-transmitting it, following the positive check having recognised that the relative address coincides with that indicated by the signal.

9. The transmission method according to claim 8, wherein each node to which is associated a time slot after the destination one does not carry out actions inside within the relative time slot having checked that the relative address is greater than the address of the destination node.

10. The transmission method according to any one of claims 5 to 9, comprising check for each node whether the signal received coincides with a signal previously re-transmitted.
